# EUROPÄISCHE PATENTSCHRIFT

(11) **EP 0 585 783 B1**
(45) Veröffentlichungstag und Bekanntmachung des Hinweises auf die Patenterteilung: **03.07.1996**
(21) Anmeldenummer: 93113516.4
(22) Anmeldetag: 24.08.1993
(51) Int. Cl.: F16J 15/20

(54) **Dichtelement aus expandiertem Graphit**
Seal element made of expanded graphite
Elément d'étanchéité en graphite expansé

(30) Priorität: 24.08.1992 DE 4228073
(43) Veröffentlichungstag der Anmeldung: 09.03.1994
(73) Patentinhaber: Martin Merkel GmbH & Co. KG, D-21107 Hamburg (DE)
(72) Erfinder: Kessler, Michael, Dipl.-Ing., D-21217 Seevetal (DE); von Borstel, Dieter, Dipl.-Ing., D-21720 Guderhandviertel (DE); Timmermann, Hans-Jürgen, Dipl.-Ing., D-22559 Hamburg (DE)
(74) Vertreter: Glawe, Delfs, Moll & Partner

(56) Entgegenhaltungen:
- EP-A- 0 268 233
- US-A- 4 559 249
- PATENT ABSTRACTS OF JAPAN vol. 14, no. 295 (M-0990)26. Juni 1990 & JP-A-20 093 171 (NIPPON VALQUA) 3. April 1990

## Beschreibung

Expandierter Graphit in Form von vorgepreßten Ringen oder wickelbaren Bändern bewährt sich als Packungsmaterial in Stopfbuchsen und dergleichen mit hoher Dichtheit auch unter hohen Temperaturen und in chemisch aggressiver Umgebung. Jedoch hat Graphit-Packungsmaterial den Nachteil, daß es gegenüber Eisenwerkstoffen hohe Reibung zeigt und mitunter zu Graphit-Anbackungen führt. Man verwendet deshalb Dichtelemente aus expandiertem Graphit hauptsächlich für statische oder wenig bewegte Abdichtungen wie Ventilspindelstopfbuchsen. Zur Vermeidung dieser Nachteile und zur Erschließung weiterer Anwendungsbereiche ist deshalb ein niedrigerer Reibbeiwert erwünscht.

Es ist bekannt (Patent Abstr. of Japan Publ. No. JP 2093171), die inneren Windungen eines Graphitbandes, aus dem Packungsringe gewickelt werden, in eine Polytetrafluorethylen-Dispersion zu tauchen und zu trocknen, um dadurch eine Beschichtung zu erhalten, die den Reibbeiwert verringert. Jedoch hat dies den Nachteil, daß dadurch auch die Haftung zwischen aufeinanderliegenden Schichten der Packung verringert wird. Die innere Festigkeit der Packung kann dadurch beeinträchtigt werden. Bei aus gewickeltem Bandmaterial vorgepreßten Pakkungsringen lösen sich deren innere Schichten.

Bekannt ist es auch, einen formgepreßten Packungsring aus einem Laminat eines Metalldrahtnetzes mit einer Graphitfolie herzustellen, die mindestens auf einer Seite mit Polytetrafluorethylen beschichtet ist (US-A 4 559 249). Das Laminat wird gewickelt und verpreßt, wobei sich ein Produkt ergibt, dessen Festigkeit durch ein Metalldrahtgerüst bewirkt wird, in welchem Graphit und Polytetrafluorethylen gleichmäßig verteilt sind, wobei der Graphit als wärmebeständige Füllmasse dient und das Polytetrafluorethylen als Gleithilfsmittel. Jedoch hat die Anwesenheit des Metalldrahts im Produkt, dessen Durchstoßen auf die Gleitfläche nicht mit Sicherheit verhindert werden kann, schwerwiegende Nachteile.

Der Erfindung liegt die Aufgabe zugrunde, ein Dichtelement der eingangs genannten Art zu schaffen, das einen Zusatzstoff enthält, ohne daß dadurch der Zusammenhalt der Graphitmatrix gestört ist.

Die erfindungsgemäße Lösung besteht zum einen darin, daß ein Dichtelement in Form eines wickelbaren, flachen Bandes aus expandiertem Graphit Abstand von voneinander aufweisende Ausnehmungen in seiner Oberfläche aufweist, die den Zusatzstoff ausschließlich enthalten. Zum anderen besteht die erfindungsgemäße Lösung darin, daß ein aus Folien expandierten Graphits formgepreßtes Dichtelement, dem die unmittelbare Verbindung der miteinander verpreßten Folienoberflächen Festigkeit verleiht, in den ihn bildenden Folien zumindest in der Nähe seiner Gleitoberfläche Abstand voneinander aufweisende Ausnehmungen aufweist, die den Zusatzstoff enthalten wobei der Zusatzstoff ausschließlich in den Ausnehmungen enthalten ist. Dieser Zusatzstoff ist vorzugsweise ein Polyfluorkohlenstoff, insbesondere PTFE. Die Ausnehmungen können als Perforationen ausgebildet sein.

Zwar ist es bei dem bekannten mit Metalldraht bewehrten Packungsring (US-A 4 559 249) bekannt, die in dem Laminat verwendete Graphitfolie zu perforieren, wobei das PTFE so aufgebracht wird, daß es auch die Perforationen füllt; jedoch soll auch stets eine Schichtauflage von PTFE auf mindestens einer Oberfläche der Graphitfolie erzielt werden, die die unmittelbare Festigkeitsvermittlung von Graphitschicht zu Graphitschicht im verpreßten Produkt in Frage stellt. Demgegenüber ist im Falle der Erfindung der Zusatzstoff ausschließlich in den Perforationen enthalten, während die Oberflächen des Graphitbandes bzw. der Folien davon im wesentlichen, d.h. so weitgehend frei sind, daß sich bei der Verpressung die unmittelbare Verbindung zwischen den aufeinanderliegenden Graphitschichten entwickeln kann.

Damit die Vertiefungen bzw. Perforationen den Zusatzstoff besser festhalten können, ist es zweckmäßig, wenn die Ausnehmungen rauhe Wände aufweisen. Beim Perforieren eines Graphitbands kann sich dies Ergebnis durch Ausfaserung ohne weiteres Zutun ergeben.

Die Vertiefungen sind zweckmäßigerweise jeweils punktartig konzentriert ausgeführt. Sie können aber auch die Form von Schlitzen oder Linien mit gerader oder beliebig gekrümmter Form annehmen.

Die Erfindung bezieht sich auch auf ein Verfahren zum Herstellen eines derartigen Dichtelements. Auch hat sich gezeigt, daß bei Herstellung von vorgepreßten Packungsringen aus gewickeltem Bandmaterial deren Festigkeit besonders hoch ist, wenn erfindungsgemäß mit Vertiefungen versehenes oder perforiertes Bandmaterial zur Herstellung verwendet wird. Man kann annehmen, daß die durch die Ausnehmungen aufgerauhten Oberflächen der Bänder zu einem innigeren Verbund befähigt werden.

Als Zusatzstoff kommen sämtliche Stoffe in Frage, die die Eigenschaften oder das Betriebsverhalten der Dichtung oder der dazu benachbarten Teile irgendwie beeinflussen. Dies sind in erster Linie Gleithilfsstoffe wie Polytetrafluorethylen, Molybdändisulfid und Kupferpasten. Bewährt haben sich beispielsweise sogenannte PTFE-Wachse (niedermolekulares Polytetrafluorethylen in Pulverform), wie sie unter dem eingetragenem Warenzeichen Hostaflon-Wachs im Handel sind. Ferner sind Zusatzstoffe von Interesse, die die Korrosionsgefahr, den Extrusionsschutz oder die elektrische Leitfähigkeit günstig beeinflussen. Es können Gemische verschiedener Zusatzstoffe verwendet werden.

Damit der Zusatzstoff aus den Ausnehmungen beim Verpressen des Dichtelements nicht herausgedrückt und zwischen die miteinander zu verbindenden Graphitschichten gepreßt wird, kann es zweckmäßig sein, für diese Ausnehmungen mit dem darin enthaltenen Zusatzstoff mindestens dieselbe Komprimierbarkeit wie für das Graphit-Grundmaterial vorzusehen. Dies kann bei pulverförmigem Zusatzstoff dadurch geschehen, daß dieser mindestens ebenso komprimierbar wie das Graphitmaterial ist, d.h. keine größere Volumendichte als das Grundmaterial aufweist. Insbesondere bei flüssigem oder pastenförmigem Zusatzstoff kann dies dadurch bewirkt werden, daß die Ausnehmungen nur zu einem entsprechend geringen Anteil gefüllt werden.

Die Erfindung wird im folgenden näher unter Bezugnahme auf die Zeichnung erläutert, die vorteilhafte Ausführungsbeispiele veranschaulicht. Es zeigen:
- Fig. 1 u. 2: Längsschnitte durch ein Graphitband in vergrößertem Maßstab,
- Fig. 3 u. 4: Draufsichten auf ein solches Band,
- Fig. 5: einen Teilquerschnitt durch einen daraus zusammengesetzten Ring in vergrößertem Maßstab und
- Fig. 6: einen Querschnitt durch einen Packungsring.

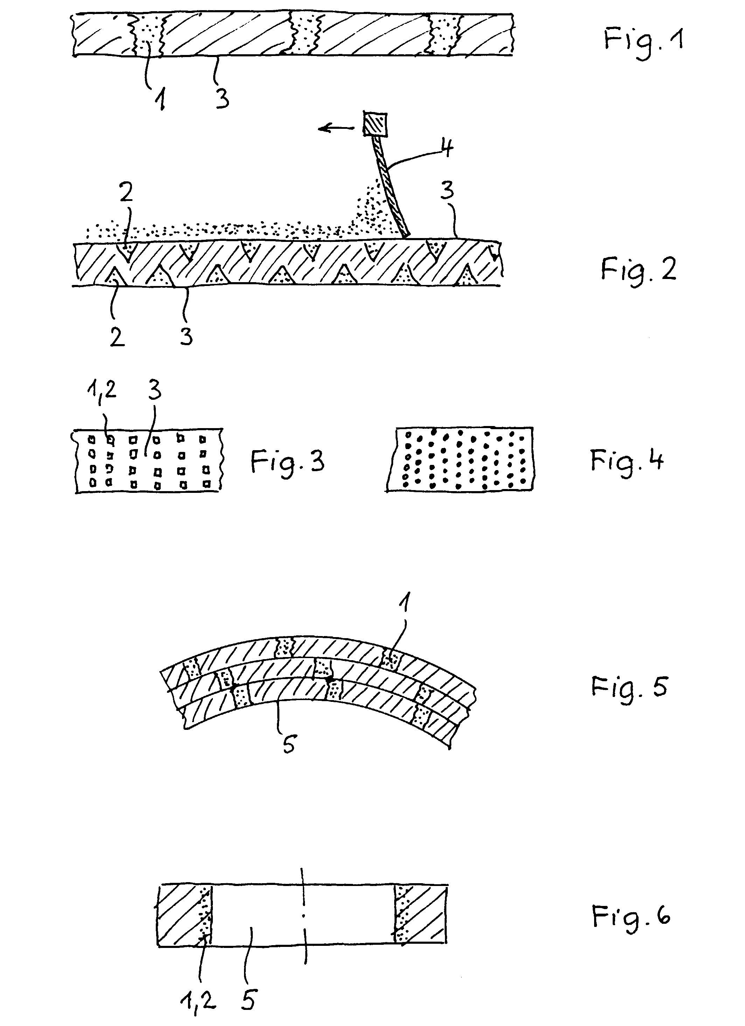

Bei den in Fig. 1-4 dargestellten Graphitbändern kann es sich um solche handeln, die im Grundsatz bekannt sind als flexible Bänder aus expandiertem Graphit, wie sie für die Herstellung von Stopfbuchspackungen verwendet werden. Sie haben eine Dicke von einigen Zehntelmillimetern und eine Breite von einem bis mehreren Zentimetern.

Gemäß Fig. 3 und 4 ist ein solches Band mit regelmäßig verteilten Vertiefungen versehen. Diese Vertiefungen können als Perforationen 1 oder ein- oder doppelseitige Ausnehmungen 2 ausgebildet sein. In Fig. 1 wurde angedeutet, daß die Perforationsränder rauh ausgefasert sind, wodurch ihre Fähigkeit, den pulverförmig angedeuteten Zusatzstoff darin festzuhalten, gesteigert wird. Wenn ihre Wände glatt sind, wie dies bei den Vertiefungen 2 in Fig. 2 angenommen wird, kann der Zusatzstoff mit einem Bindemittel oder Haftmittel versehen werden, um zumindest während der Lager- und Verarbeitungszeit darin festgehalten zu werden.

Die übrige Oberfläche 3 der Bänder ist von Zusatzstoff im wesentlichen frei. Dies kann beispielsweise, wie in Fig. 2 angedeutet, dadurch bewirkt werden, daß der Zusatzstoff-Überschuß mit einem Rakel 4 abgestrichen wird. Dadurch wird diese Oberfläche in die Lage versetzt, mit anderen entsprechenden Oberflächen während der Verpressung, die in der Vorfertigung oder erst in der Stopfbuchse stattfindet, mehr oder weniger homogen in Kontakt zu treten und eine durchgehende Graphitmatrix zu bilden. Die durch die Perforationen 1 oder Vertiefungen 2 bewirkten Oberflächenstörungen können dazu beitragen, einen innigen Verbund der Oberflächen durch gegenseitige Verzahnung zu fördern.

Die Vertiefungen können in anderer Form und Anordnung vorgesehen werden. Beispielsweise können sie unsymmetrisch vorgesehen werden, um auf einer Seite eine größere Zusatzstoffdichte als auf der anderen zu erzeugen. Ferner können sie (vorzugsweise reihenweise) mit unterschiedlichen Zusatzstoffen befüllt sein.

In einem vorgepreßten Packungsring, von dem ein Teil in Fig. 5 schematisch vergrößert dargestellt ist, bilden die Perforationen 1 bzw. Vertiefungen 2 Nester, die mit dem Zusatzstoff gefüllt sind. Die mit der Dichtungsfläche 5 in Verbindung tretenden Nester geben ihren Inhalt frei, wodurch dieser in der Dichtfläche wirksam wird. Diejenigen Querschnittsbereiche des Packungsrings, die während ihrer Lebenszeit voraussichtlich nicht zur Bildung der Dichtfläche herangezogen werden, brauchen die erfindungsgemäße Gestalt nicht aufzuweisen.

Fig. 6 veranschaulicht das Beispiel eines Packungsrings, bei dem die Zusatzstoff-Nester 1, 2 lediglich in der Nähe des die Dichtfläche bildenden Innenumfangs 5 angeordnet sind. Dieser Packungsring kann schichtweise aus Bändern gemäß Fig. 1-4 hergestellt sein.

Angestrebt wird im allgemeinen eine etwa gleichmäßige Verteilung der Nester über das damit ausgestattete Volumen.

## Patentansprüche

1. Dichtelement in Form eines wickelbaren, flachen Bandes aus expandiertem Graphit mit einem Zusatzstoff, dadurch gekennzeichnet, daß der Zusatzstoff ausschließlich in Abstand voneinander aufweisenden Ausnehmungen (1,2) in der Oberfläche (3) des Bandes enthalten ist.

2. Aus Folien expandierten Graphits formgepreßtes Dichtelement, dem die unmittelbare Verbindung der miteinander verpreßten Folienoberflächen Festigkeit verleiht, dadurch gekennzeichnet, daß die das Dichtelement bildenden Folien zumindest in der Nähe seiner Gleitoberfläche Abstand voneinander aufweisende Ausnehmungen (1,2) aufweisen, die einen Zusatzstoff enthalten, wobei der Zusatzstoff ausschließlich in den Ausnehmungen (1, 2) enthalten ist.

3. Dichtelement nach Anspruch 1 oder 2, dadurch gekennzeichent, daß der Zusatzstoff einen Polyfluorkohlenstoff, insbesondere PTFE, umfaßt.

4. Dichtelement nach einem der Ansprüche 1 bis 3, dadurch gekennzeichnet, daß die Ausnehmungen als Perforationen (1) ausgebildet sind.

5. Dichtelement nach einem der Ansprüche 1 bis 4, dadurch gekennzeichnet, daß die Ausnehmungen rauhe Wände aufweisen.

6. Dichtelement nach einem der Ansprüche 1 bis 5, dadurch gekennzeichnet, daß der Zusatzstoff ein Pulver ist.

7. Dichtelement nach einem der Ansprüche 1 bis 6, dadurch gekennzeichnet, daß der Zusatzstoff komprimierbar ist und/oder die Ausnehmungen nicht gänzlich füllt.

8. Verfahren zum Herstellen eines Dichtelements nach einem der Ansprüche 1 bis 7, dadurch gekennzeichnet, daß ein flaches, wickelbares Graphitband mit Abstand voneinander aufweisenden in seiner Oberfläche versehen, ein Zusatzstoff in die Ausnehmungen eingebracht und die Bandoberfläche abgestrichen wird.

## Claims

1. A sealing element in the form of a coilable flat strip of expanded graphite with an additive, characterised in that the additive is contained exclusively in spaced apart recesses (1,2) in the surface (3) of the strip.

2. A sealing element which is compression-moulded from laminae of expanded graphite and to which strength is imparted by the direct bonding of the pressed-together laminae surfaces, characterised in that the laminae forming the sealing element have at least in the vicinity of its sliding surface spaced apart recesses (1,2) which contain an additive, the additive being contained exclusively in the recesses (1,2).

3. A sealing element according to Claim 1 or 2, characterised in that the additive comprises a polyfluorocarbon, in particular PTFE.

4. A sealing element according to any one of Claims 1 to 3, characterised in that the recesses are in the form of perforations (1).

5. A sealing element according to any one of Claims 1 to 4, characterised in that the recesses have rough walls.

6. A sealing element according to any one of Claims 1 to 5, characterised in that the additive is a powder.

7. A sealing element according to any one of Claims 1 to 6, characterised in that the additive is compressible and/or does not completely fill the recesses.

8. A method of producing a sealing element according to any one of Claims 1 to 7, characterised in that a flat coilable graphite strip is provided with spaced apart recesses in its surface, an additive is introduced into the recesses and the strip surface is smoothed.

## Revendications

1. Elément d'étanchéité sous forme d'un ruban plat enroulable en graphite expansé avec un additif, caractérisé en ce que l'additif est contenu exclusivement dans des creux (1,2) situés à distance les uns des autres dans la surface (3) du ruban.

2. Elément d'étanchéité moulé par compression à partir de feuilles de graphite expansé, auquel la jonction directe des surfaces des feuilles comprimées ensemble donne de la résistance, caractérisé en ce que les feuilles qui forment l'élément d'étanchéité présentent des creux (1,2) qui sont situés à distance les uns des autres au moins à proximité de la surface de glissement dudit élément et qui contiennent un additif, l'additif étant exclusivement contenu dans les creux (1,2).

3. Elément d'étanchéité selon la revendication 1 ou 2, caractérisé en ce que l'additif comprend un polymère d'hydrocarbure fluoré, en particulier du PTFE.

4. Elément d'étanchéité selon l'une quelconque des revendications 1 à 3, caractérisé en ce que les creux sont réalisés sous forme de perforations (1).

5. Elément d'étanchéité selon l'une quelconque des revendications 1 à 4, caractérisé en ce que les creux présentent des parois rugueuses.

6. Elément d'étanchéité selon l'une quelconque des revendications 1 à 5, caractérisé en ce que l'additif est une poudre.

7. Elément d'étanchéité selon l'une quelconque des revendications 1 à 6, caractérisé en ce que l'additif est compressible et/ou ne remplit pas complètement les creux.

8. Procédé de fabrication d'un élément d'étanchéité selon l'une quelconque des revendications 1 à 7, caractérisé en ce qu'un ruban de graphite plat enroulable est muni de creux situés à distance les uns des autres dans sa surface, un additif est introduit dans les creux et la surface de la bande est raclée.
